# EUROPEAN PATENT APPLICATION

(11) **EP 2 202 707 A1**
(43) Date of publication of application: **30.06.2010**
(21) Application number: 09180509.3
(22) Date of filing: 22.12.2009
(51) Int. Cl.: G08G 1/017, G07B 15/00

(54) **Monitoring road usage**

(30) Priority: 23.12.2008 ES 200803680
(71) Applicant: Vodafone Group PLC, Newbury Berkshire RG14 2FB (GB); Vodafone España, S.A.U., 28108 Alcobendas (ES)
(72) Inventor: Martin, Alberto, 28050 Madrid (ES); Almodóvar Herraiz, Daniel, 28050 Madrid (ES)
(74) Representative: Keston, David Arthur

(57) **Abstract**

A system for monitoring road usage by vehicles having associated vehicle terminal units (1) operable to communicate with a cellular telecommunications network, the system comprising:
an identity capture unit (2) configured to broadcast, in the licensed spectrum of at least one cellular telecommunications network operator, a Location Area Code (LAC) different from any other LAC of the radio cells of the cellular telecommunications network in the surroundings; said identity capture unit establishing a Location Update dialogue with each associated vehicle terminal unit answering to the LAC broadcast; and obtaining from each answering vehicle terminal unit at least one unique identifier; and
a subscriber validation unit (3), which in operation checks the captured identifiers against those of subscribers of the road usage charging service and, in case of match, reports the identifier capture event. That event may be used as a trigger for the systems of the road usage charging service (4).

## Description

The invention relates to a system and method for monitoring road usage in certain geographic areas through valid identification of vehicles and their position. In particular, the invention facilitates the implementation of road pricing, such as toll fees, and certain traffic enforcement measures.

### BACKGROUND OF THE INVENTION

For monitoring purposes, or for determining fees such as toll fees or road charge for usage of specific streets, highways or other geographic areas, the position and identity of vehicles have to be determined.

Different solutions have been suggested in the past. The basic model, wherein the driver has to supply information about the vehicle's position manually, is labour and cost intensive and therefore new models have been sought.

Another suggested approach is the usage of microwave based communication systems, referred to as Dedicated Short Range Communication (DSRC). The main disadvantage here is that such an approach requires proprietary DSRC components, which leads to cost, compatibility and maintenance issues.

There have also been prior attempts to utilize dedicated mobile devices or terminals of a cellular network in systems for localizing and charging vehicles. The Applicant's European patent application EP1879151 describes one such method for detecting the location of a vehicle in an area, wherein the vehicle has at least one on-board unit assigned to it and, at least, one enforcement unit for sending signals to and/or receiving signals from the on-board unit is provided. The method is **characterized in that** the communication channel for communication between the, at least one, on-board unit and, at least, one enforcement unit and/or the characteristics of the area covered by the enforcement unit are set in accordance to the conditions within the area to be covered and/or the nature of the enforcement unit.

The Applicant's European patent application EP1879150 describes a method for transmitting information within an enforcement system of a monitoring or road charging system, wherein at least one mobile device and at least one enforcement unit are provided. The method is **characterized in that** the mobile device upon receipt of a triggering signal from the enforcement unit initiates a transmission of information via an uplink transmission channel to the enforcement unit.

European patent application EP0750828 describes a process for locating mobile stations in a cellular mobile radio network. In addition to the locating functions within the mobile radio network, the mobile stations evaluate signals from transmitters each of which forms a locally delimited trigger cell (underlay broadcast cell).

While flexible and efficient, the techniques disclosed in the above-mentioned documents can not be guaranteed to work with all mobile handsets in the market and all base stations or equivalent equipment placed locally at the toll.

### SUMMARY OF THE INVENTION

In order to avoid the drawbacks explained above, there is provided a system for monitoring road usage by vehicles having associated vehicle terminal units operable to communicate with a cellular telecommunications network, the system comprising: an identity capture unit configured to broadcast, in the licensed spectrum of at least one cellular telecommunications network operator, a Location Area Code (LAC) different from any other LAC of the radio cells of the cellular telecommunications network in the surroundings; said identity capture unit establishing a Location Update dialogue with each associated vehicle terminal unit answering to the LAC broadcast; and obtaining from each answering vehicle terminal unit at least one unique identifier; and a subscriber validation unit, which in operation checks the captured identifiers against those of subscribers of the road usage charging service and, in case of match, reports the identifier capture event.

Road usage is monitored to allow road charging and/or traffic enforcement measurements. Advantageously, the system's operation is based on standard cellular network mechanisms.

The system comprises: a first function (or "vehicle function") means associated with the vehicle, hereafter generally referred to as a vehicle terminal unit; a second function (or "identity capture function") means associated with a fixed geographical point (e.g. toll, gate, border of congestion area), hereafter generally referred to as an identity capture unit; and a third function or "subscriber validation function" means, hereafter referred to as a subscriber validation unit.

The vehicle terminal unit is preferably a conventional mobile phone carried by a vehicle user, the user's phone being signed up for the road usage monitoring service. Alternatively, the vehicle terminal unit may be a dedicated OBU (On-board Unit) with embedded mobile telecommunications components.

The identity capture unit preferably includes a subunit in the vicinity of the geographical point to be monitored for radio transmissions. In certain embodiments, part of the functionality of the identity capture unit may be located remotely in the network. The identity capture unit uses standard cellular mechanisms (similar to the ones in existing BTS and BSC/RNC). The subunit of the identity capture unit includes a transmitter arrangement having a configurable antenna system. It broadcasts system information with a certain LAC (Location Area Code), forcing mobile terminals of the same operator network within range of its transmitter arrangement to send a Location Update message. It then captures the identity (e.g. IMSI) of those mobile terminals and sends back a Location Update reject message to avoid further disturbing the terminals (at least for a certain period chosen by the network operator or until the terminals are switched off). The radiation pattern of the antenna system can be modified to shape the coverage area convenient to the particular use case.

The subscriber validation unit may be located either local to the venue (i.e. the geographical point to be monitored for radio transmissions) or remote therefrom. It checks the identities captured by the identity capture unit against those of subscribers of the road usage monitoring service and, in case of match, generates a trigger for the systems of the road usage monitoring service.

In common with EP1879150 & EP1879151, the invention may be configured with an OBU and an enforcement unit for road usage charging. However, the present invention is based on existing standard cellular mechanisms and hence is compatible with all mobile handsets and with the standard behaviour of existing radio access networks (e.g. existing MSC, BSC, RNC, BTS or Node B).

The invention also benefits from the use of the location update dialogue with IMSI capture. This facilitates the capture of a richer and more complete record of data for monitoring movements of service subscribers as well as non-subscribers.

The invention can be deployed for a single network operator, hence valid only for the mobile terminals served by the cellular network of that operator, or for several mobile operators. In the latter case, some parts such as the antenna system of the identity capture unit may be shared by the different operators.

A clear advantage of the invention is that it is fully compatible with conventional, deployed cellular communications mechanisms, which leads to wider reach of the service in the market, lower cost of the vehicle terminal units (requiring only standard mobile phones) and lower cost of the identity capture units (requiring adaptation of standard access network nodes rather than the manufacture and distribution of bespoke units).

In another aspect of the present invention there is provided a method for monitoring road usage by vehicles having associated vehicle terminal units operable to communicate with a cellular telecommunications network, the method comprising:
broadcasting, in the licensed spectrum of at least one cellular telecommunications network operator, a Location Area Code (LAC) different from any other LAC of the radio cells of the cellular telecommunications network in the surroundings;
establishing a Location Update dialogue with each associated vehicle terminal unit answering to the LAC broadcast;
obtaining from each answering vehicle terminal unit at least one unique identifier;
checking the captured identifiers against those of subscribers of the road usage charging service and,
in case of match, reporting the identifier capture event.

The identity capture method thus mimics a conventional cellular telecommunications signal dialogue. Broadcasting specific system information as if it was a BTS (base station) and forcing a Location Update message by all mobile terminals within range of the identity capture unit belonging to its cellular network; and capturing a unique identifier for those terminals, (in a preferred example, the unique identifier is the IMSI associated with the SIM in each mobile terminal), and rejecting further Location Update attempts.

Where the unique identifier is the IMSI, the system may consult external resources in order to translate the IMSI into MSISDN (i.e. the "telephone number" of the mobile terminal) or other identity.

In operation then, first the vehicle terminal unit is switched on, scanning the radio spectrum as per standard cellular network procedures: then the identity capture unit is switched on, broadcasting radio information as per standard cellular network procedures, the radio information including a specific LAC, different from the one of the surrounding cells of the cellular network.

Next, when a vehicle having a suitable vehicle terminal unit enters the coverage area of the identity capture unit, it detects the transmissions of the latter, and initiates a standard cellular location updating dialogue. The identity capture unit manages that dialogue between both functions, with the final results of rejecting the location updating and obtaining the IMSI of the vehicle function.

Finally, the identity capture unit sends the captured identities to the subscriber validation unit that consults internal and/or external databases to discern whether the captured identifiers belong to subscribers of the road usage monitoring service, and if the results are positive, it reports the fact. This may result in the generation of a trigger to an external road usage charging system or to a traffic enforcement system.

Throughout the description and claims the word "comprise" and variations of the word, are not intended to exclude other technical features, additives, components, or steps. Additional objects, advantages and features of the invention will become apparent to those skilled in the art upon examination of the description or may be learned by practice of the invention. The following examples and drawings are provided by way of illustration, and they are not intended to be limiting of the present invention. Furthermore, the present invention covers all possible combinations of particular and preferred embodiments described herein.

### BRIEF DESCRIPTION OF THE DRAWINGS

For a better understanding of the present invention, embodiments will now be described by way of example, with reference to the accompanying drawings, in which:
FIG. 1 shows an illustrative figure of how functions could be distributed in an architecture where a local subunit arranged to perform all the functions of an identity capture unit. The subunit is connected to a remote subscribers validation unit in the network side, which generates triggers to the existing road usage charging systems.
FIG. 2 shows an illustrative figure of how a local subunit with a specific LAC (Location Area Code) can coexist with the surrounding cells of the radio access network using other different values of LAC.
FIG. 3 shows an illustrative figure of how the radiation patterns of the local units can be adapted to cover, for instance, different lanes of a highway.

### DETAILED DESCRIPTION OF PARTICULAR EMBODIMENTS

The attached figures illustrate a system for road usage monitoring based on standard cellular network mechanisms in accordance with an embodiment the invention. The illustrated system comprises, at least:
a first function 1 or "vehicle function" in the shape of a unit at a vehicle that can be either a dedicated OBU (On-board Unit) with a mobile phone embebbed, or a real mobile phone carried by the user, signed up for the road usage charging service;
a second function or "identity capture function" 2 that must always include a unit local to the venue (e.g. toll, gate, border of congestion area) for radio transmissions and besides may have part of its functionality located remotely in the network. This function replicates a standard cellular mechanism for the dialogue with mobile phones within its reach 21. In particular, this local unit broadcasts specific system information as if it was a BTS (base station) and forces a Location Update message by all mobile phones within its reach belonging to its cellular network. Then, the function captures the identity of those phones, such as the IMSI, and rejects the Location Update attempts, hence not disturbing the mobile phones further. This behaviour is based on well-known standard cellular procedures for GSM and UMTS and the local unit can be built based on existing picocell technology with a very low cost (e.g. below 200 euros). Location Update procedures are described in detail in ETSI 123 909 V4.0.0 (2001-03), a technical report from the European Telecommunications Standards Institute and 3GPP TS 23.012, from the 3rd Generation Partnership Project
a third function or "subscriber validation function" 3, either local to the venue or remote, that check the captured identities, against those of subscribers of the road usage charging service and, in case of match, reports the identity capture event.

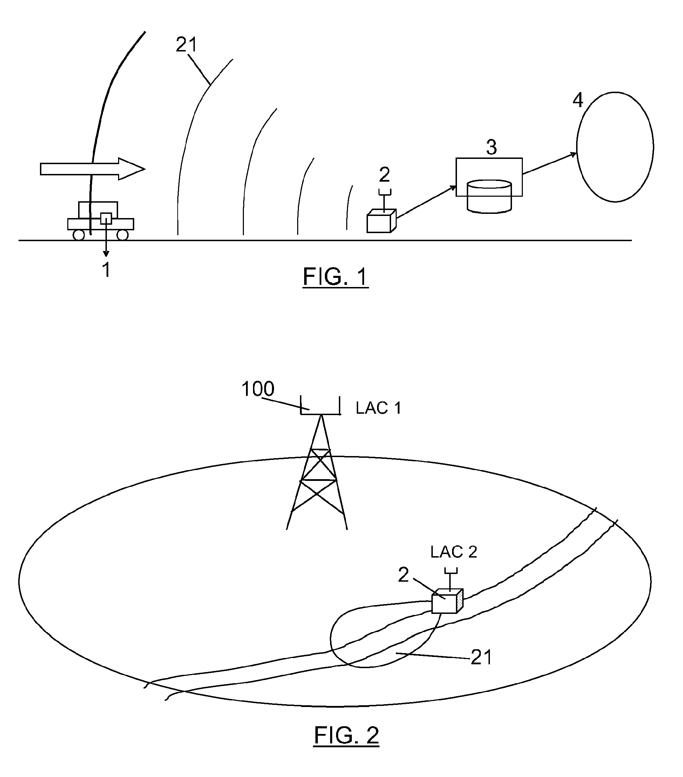

The report of an subscriber identity capture event may be used in charging or enforcement deployments. In the road charging embodiment, as illustrated in Figure 1, such a report generates a trigger for the systems of the road usage charging service 4. Such systems of the road usage charging service 4, out of the scope of this patent, would convert that trigger into actions such as opening the barrier to let the vehicle pass, charging some money to the user's account or storing the event in a database for future enforcement by the road usage charging authority. Note that this function could manage the inputs received from multiple 'identity capture' functions (e.g. for the different lanes of a road, of from the different entries of an urban congestion area), acting them as a concentrator or aggregator. The database used by the charging function can be local or remote to the charging function, i.e. it may require that the charging function consults external resources (e.g. HLR database in the cellular network for the translation of IMSI into MSISDN or other identity).

Additional details of the identity capture unit 2 are described hereafter: the unit 2 (here shown comprising a local subunit together with network systems processing subunit) implements a small subset of the functionality of a BTS, BSC/RNC and MSC, in particular the one described below.

The local subunit transmits and receives in the licensed spectrum of a mobile network operator. This local subunit broadcasts system information in the radio interface towards the mobile phones using the standard procedures and channels for that purpose. As part of its Cell Global Identity, this unit broadcasts a LAC (Location Area Code) that is different from any LAC of the "real" cells (100) of the mobile network in the surroundings (e.g. the operator can book special Location Area Codes for the road usage charging service), as can be shown in figure 2.

Due to the standard behaviour in any mobile phone, when a phone detects this Location Area Code because it enters under coverage of the unit, the mobile phone will initiate a Location Update dialogue with the unit.

The identity capture unit (local subunit and/or network systems processing subunit) will respond to that dialogue and, again following standard procedures, will force the phone to provide its IMSI number (note that even if the phone answers first with the TIMSI number, which is a temporal identity, the identity capture unit can still request the phone to provide the IMSI number).

Once the IMSI number has been obtained, the identity capture unit will finish the dialogue sending a Location Updating Reject message to the phone with a rejection cause that will instruct the phone not to retry a Location Update dialogue with the identity capture unit during a known timer (e.g. 2 hours) or as long as the phone keeps switched on (depending oin the chosen rejection cause). This means that the mobile phone will ignore the radio transmissions of the local subunit from this moment on and will not try to connect with it even it is still under the coverage of the subunit, unless the period expires or the phone is switched off and switched on again within that coverage.

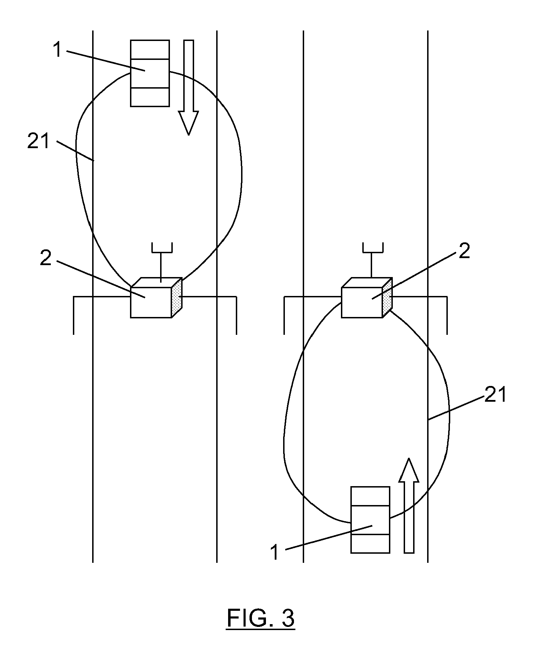

The coverage area of the local subunit can be configured based on two aspects: first, the transmission power, which determines the range; second, the features of the antenna system (e.g. radiation pattern, gain, downtilt), which determine the shape of the coverage. Both aspects can be statically or dynamically modified to shape a particular area that is convenient to the road usage charging scenario, e.g. covering only one lane of the road, or all the lanes in one direction, or covering very exactly the entrance of an urban congestion area, as can be shown in figure 3.

The operating parameters of the local subunit (e.g. Location Area Code, transmitting power, antenna system) may be configured locally or remotely via a conventional remote Operation & Maintenance system (e.g. based on IP protocols).

As mentioned before, the indentity capture unit may be entirely local (i.e. all the procedure replicating BTS, BSC/RNC and MSC can be managed by the local subunit, acting standalone) or can be a combination of local subunit plus network equipment (some parts of the procedure executed locally and other parts processed remotely). In any case, a local subunit is always required for radio transmissions.

This subunit can be fixed (e.g. installed in a toll) or mobile (e.g. installed in a car of the toll authority).

In case of a multi-operator scenario, some parts of the identity capture unit will be duplicated per operator (i.e. network systems processing subunit) whereas others can be shared (i.e. antenna system).

## Claims

1. A method for monitoring road usage by vehicles having associated vehicle terminal units operable to communicate with a cellular telecommunications network, the method comprising:
broadcasting, in the licensed spectrum of at least one cellular telecommunications network operator, a Location Area Code (LAC) different from any other LAC of the radio cells of the cellular telecommunications network in the surroundings;
establishing a Location Update dialogue with each associated vehicle terminal unit answering to the LAC broadcast;
obtaining from each answering vehicle terminal unit at least one unique identifier;
checking the captured identifiers against those of subscribers of the road usage charging service and,
in case of match, reporting the identifier capture event.

2. The method according to claim 1 wherein the broadcast LAC is selected from a group of Location Area Codes that are unused in the cells of cellular telecommunications network.

3. The method according to claim 1 or claim 2, further comprising sending a Location Updating Reject message to each mobile terminal whose unique identifier has been obtained.

4. A system for monitoring road usage by vehicles having associated vehicle terminal units operable to communicate with a cellular telecommunications network, the system comprising:
an identity capture unit configured to broadcast, in the licensed spectrum of at least one cellular telecommunications network operator, a Location Area Code (LAC) different from any other LAC of the radio cells of the cellular telecommunications network in the surroundings; said identity capture unit establishing a Location Update dialogue with each associated vehicle terminal unit answering to the LAC broadcast; and obtaining from each answering vehicle terminal unit at least one unique identifier; and
a subscriber validation unit, which in operation checks the captured identifiers against those of subscribers of the road usage charging service and, in case of match, reports the identifier capture event.

5. The system according to claim 4 wherein the subscriber validation unit is physically local to the area where vehicle usage is to be monitored.

6. The system according to claim 4 wherein the subscriber validation unit is physically remote from the area where vehicle usage is to be monitored.

7. The system according to any one of claims 4 to 6, wherein the subscriber validation unit is arranged to manage the inputs received from a plurality of identity capture units, thereby acting as a concentrator.

8. The system according to claims 4 to 7, wherein the coverage area of the identity capture unit is arranged to be configurable.

9. The system according to claims 4 to 8, wherein the report of a subscriber identifier capture event is used to trigger to an external road usage charging system event.
